# EUROPÄISCHE PATENTSCHRIFT

(11) **EP 1 301 920 B1**
(45) Veröffentlichungstag und Bekanntmachung des Hinweises auf die Patenterteilung: **07.05.2008**
(21) Anmeldenummer: 01953853.7
(22) Anmeldetag: 04.07.2001
(51) Int. Cl.: G10L 15/06

(54) **HYBRIDES LEXIKON FÜR DIE SPRACHERKENNUNG**
HYBRID LEXICON FOR SPEECH RECOGNITION
LEXIQUE HYBRIDE DE RECONNAISSANCE VOCALE

(30) Priorität: 14.07.2000 DE 10034235
(43) Veröffentlichungstag der Anmeldung: 16.04.2003
(73) Patentinhaber: SIEMENS AKTIENGESELLSCHAFT, 80333 München (DE)
(72) Erfinder: MARSCHALL, Erwin, 82467 Garmisch-Partenkirchen (DE); WILHELM, Ralph, 80997 München (DE); NIEMÖLLER, Meinrad, 83607 Holzkirchen (DE)
(86) Internationale Anmeldenummer: PCT/DE2001/002472
(87) Internationale Veröffentlichungsnummer: WO 2002/007147

(56) Entgegenhaltungen:
- US-A- 5 315 689
- MATSUMURA T ET AL: "Non-uniform unit based HMMs for continuous speech recognition" SPEECH COMMUNICATION, ELSEVIER SCIENCE PUBLISHERS, AMSTERDAM, NL, Bd. 17, Nr. 3, 1. November 1995 (1995-11-01), Seiten 321-329, XP004001046 ISSN: 0167-6393
- CHIN-HUI LEE ET AL: "WORD RECOGNITION USING WHOLE WORD AND SUBWORD MODELS" SPEECH PROCESSING 1. GLASGOW, MAY 23 - 26, 1989, INTERNATIONAL CONFERENCE ON ACOUSTICS, SPEECH & SIGNAL PROCESSING. ICASSP, NEW YORK, IEEE, US, Bd. 1 CONF. 14, 23. Mai 1989 (1989-05-23), Seiten 683-686, XP000089815

## Beschreibung

Die Erfindung betrifft ein Verfahren zur Spracherkennung auf der Basis eines Hidden-Markov-Modells nach dem Oberbegriff des Anspruchs 1 sowie einen entsprechenden Spracherkenner nach dem Oberbegriff des Anspruchs 5.

Spracherkennungssysteme finden zunehmend Verbreitung auf verschiedenen Gebieten der Technik und auch im privaten Einsatz, so unter anderem bei der telefonischen Auftragsbearbeitung und Bearbeitung anderweitiger telefonischer Kundenansprachen bei Banken, im Versandhandel etc., bei der sprachgesteuerten Textverarbeitung im Bürobetrieb und privaten Einsatz und der Sprachsteuerung von technischen Geräten verschiedener Art.

Für den praktischen Einsatz von Spracherkennungssystemen ist eine wirksame und flexible Sprecheradaption, d. h. eine hohe Erkennungsgenauigkeit von durch verschiedene Sprecher eingesprochenen Worten und Sätzen, von essentieller Bedeutung. Besonders hohe Anforderungen in dieser Hinsicht stellen Spracherkennungssysteme für die oben erwähnten kommerziellen Anwendungen, da hierbei kein Training auf einen oder wenige Sprecher erfolgen kann, sondern das System die Spracheingaben einer großen Anzahl von Sprechern mit verschiedensten Sprachfärbungen und sprachlichen Eigenarten mit höchster Zuverlässigkeit verarbeiten muß.

Bekannt sind Spracherkennungssysteme auf der Basis von Hidden-Markov-Modellen (HMM), bei denen die zu erkennenden Wörter als Ketten von Zuständen modelliert und mit vorgegebenem Sprachdatenmaterial trainiert werden. Hierbei können zwei grundsätzlich verschiedene Vorgehensweisen praktiziert werden:

Bei Ganzwort-Modellen modelliert man Wörter durch Zustände, die Teilen eines bestimmten Wortes entsprechen und nur für das jeweilige Wort gelten. Diese Modellierung liefert gute Erkennungsergebnisse, kann jedoch nur Wörter erkennen, die auch Bestandteil des beim Training verwendeten Sprachdatenmaterials waren. Darüber hinaus eignet sich diese Art der Modellierung nur für kleine Wortschätze, da sie für größere Wortschätze zu verarbeitungsaufwendig und damit auch zu langsam wird. Ganzwort-Modelle werden üblicherweise bei Anwendungen eingesetzt, wo nur Ziffern oder Ziffernketten zu erkennen sind.

Bei phonem-basierten Modellen werden die Wörter durch Zustände modelliert, die Phonemen oder Teilen von Phonemen entsprechen. Diese Modellierung ist unabhängig vom konkreten Wortschatz des Sprachdatenmaterials, so daß dem Spracherkenner im späteren praktischen Einsatz beliebige zusätzliche Worte hinzugefügt werden können. Dieser Vorteil wird jedoch mit einer geringeren Erkennungsgenauigkeit erkauft. Dennoch wird bei Spracherkennungssystemen, die mit großen und flexibel erweiterbaren Wortschätzen umgehen müssen, ausschließlich mit diesen phonem-basierten Modellen gearbeitet.

Das Dokument US 5,315,689 offenbart ein Verfahren für die Spracherkennung, daß unter gleichzeitige Verwendung von Ganzwort- und phonem-basierten Modelle funktionniert.

Der Erfindung liegt die Aufgabe der Bereitstellung eines verbesserten Verfahrens und Spracherkenners der gattungsgemäßen Art zugrunde, das/der sich insbesondere durch eine befriedigende Erkennungsgenauigkeit bei gleichzeitiger Flexibilität, d. h. Erweiterbarkeit des Wortschatzes, auszeichnet.

Diese Aufgabe wird hinsichtlich ihres Verfahrensaspektes durch ein Verfahren mit den Merkmalen des Anspruchs 1 und hinsichtlich ihres Vorrichtungsaspektes durch einen Spracherkenner mit den Merkmalen des Anspruchs 5 gelöst.

Die Erfindung schließt den grundlegenden Gedanken der Vereinigung der beiden oben genannten Konzepte der Ganzwort-Modellierung und phonem-basierten Modellierung ein. Sie schließt weiter den Gedanken ein, einen gegebenen Wortschatz einer Klassifizierung daraufhin zu unterziehen, welche Bestandteile des Wortschatzes bevorzugt der Ganzwort-Modellierung und welche der phonem-basierten Modellierung zu unterziehen sind. Schließlich umfaßt sie den Gedanken einer Verzeichnung der Trainingsergebnisse in einem gemeinsamen Aussprache-Lexikon.

Bei dem vorgeschlagenen Verfahren wird zunächst der bereits bekannte Wortschatz analysiert. Dabei werden leicht verwechselbare und/oder besonders wichtige Wörter identifiziert und einem ersten Teilwortschatz zugeordnet. Für diese speziellen Wörter trainiert man dann im Rahmen eines einheitlichen HMM-Suchraumes Ganzwort-Modelle und trägt entsprechende Transkriptionen in das Aussprache-Lexikon ein. Für die übrigen Wörter wird (im gleichen Kontext) ein phonem-basiertes Modell trainiert und das Aussprache-Lexikon um entsprechende Einträge ergänzt und das gemischte HMM im (einzigen) Suchraum gespeichert.

In einer zweckmäßigen Fortbildung des Erfindungsgedankens erfolgt eine Verknüpfung beider Modellierungsmethoden für ausgewählte Worte des Wortschatzes, insbesondere für diejenigen des ersten Teilwortschatzes der besonders wichtigen und/oder verwechselbaren Worte. Durch die spezielle Modellierung, z. B. von Ziffern, durch Ganzwort-Modelle als Aussprachevarianten zu der phonem-basierten Modellierung der entsprechenden Worte werden wesentlich höhere Erkennungsraten für die wichtigen Worte erreicht. Dennoch ist ein solches gemischtes Modell flexibel, denn es ist über die Methode der phonem-basierten Modellierung auf neue, im Trainingsmaterial nicht enthaltene Worte erweiterbar.

Damit verbindet die vorgeschlagene Lösung in überraschender Weise die bisher unvereinbar erscheinenden Vorzüge einer hohen Erkennungsqualität (der Ganzwort-Modellierung) und großer Flexibilität (der phonem-basierten Modellierung) in einem einzigen Verfahren bzw. Spracherkenner.

Der vorgeschlagene Spracherkenner zeichnet sich durch eine Aufteilung des Wortschatzspeichers in einen ersten und zweiten Speicherbereich für den erwähnten ersten und zweiten Teilwortschatz und die Ausführung der Trainings-Verarbeitungseinheit mit zwei relativ unabhängigen Komponenten aus, in deren einer ein Ganzwort-Modell und in deren anderer ein phonem-basiertes Modell implementiert ist. In einer hinsichtlich einer vorteilhaften Verfahrensführung bereits erwähnten zweckmäßigen Ausbildung kann die zweite Komponente (Sub-Verarbeitungseinheit) auch auf den Speicherbereich des Wortschatzspeichers zugreifen, in dem der (primär) durch die erste Komponente (Sub-Verarbeitungseinheit) zu verarbeitende Teilwortschatz gespeichert ist.

Im Ergebnis einer Parallelverarbeitung durch beide Komponenten können also Transkriptionen als Aussprachevarianten ein und desselben Wortes gewonnen werden. Der Lexikonspeicher zur Speicherung des Aussprache-Lexikons ist in dieser Ausführung so organisiert, daß bei den einzelnen Worten - zumindest des einen Teilwortschatzes - die erwähnten Aussprachevarianten abgelegt werden können.

Vorteile und Zweckmäßigkeiten der Erfindung ergeben sich im übrigen aus den Unteransprüchen sowie der nachfolgenden kurzen Erläuterung von Ausführungs- bzw. Anwendungsbeispielen.

So wird das Wort "Mikrofon" bei einer phonem-basierten Modellierung mit der Transkription "m ie k r oh f oh n" in einem Aussprache-Lexikon abgelegt. Ein Laufzeitsystem eines HMM-Spracherkenners nutzt dann die Kette von Phonemen "m" - "ie" - "k" ...", indem es diese Phoneme in weitere Untereinheiten (Segmente) zerlegt und eine entsprechende Folge von HMM-Zuständen in den Suchraum einträgt. Diese Handhabung entspricht derjenigen eines Wortes aus dem oben erwähnten zweiten Teilwortschatz mittels phonem-basierter Modellierung.

Die Ziffer "eins" als besonders wichtiges Wort wird bei der vorgeschlagenen Lösung anders gehandhabt. Anstelle oder in Ergänzung zu einer durch phonem-basierte Modellierung gewonnene Transkription wird z. B. eine Transkription "eins:0 eins:1 eins:2 eins:3 eins:4 eins:5" im Aussprachelexikon vermerkt. Die Teile "eins:0", "eins:1", ... stehen hier nicht für Phoneme, sondern für insgesamt sechs Abschnitte des Wortes "eins". Ein Laufzeitsystem eines HMM-Spracherkenners wird dann diese Kette von Wortteilen wiederum in Untereinheiten (Segmente) zerlegen und eine entsprechende Folge von HMM-Zuständen dem Suchraum hinzufügen. Die erwähnte Handhabung entspricht derjenigen eines Wortes aus dem ersten Teilwortschatz per Ganzwort-Modellierung.

Eine weitere Variante besteht darin, daß die einzelnen Wortteile zusammengesetzter Wörter, z. B. Komposita, unterschiedlich behandelt werden. So läßt sich das Wort "zweimal" als "zwei:0 zwei:1 zwei:2 zwei:3 m a l" transkribieren; der erste Wortteil "zwei" wird also mit Ganzwort-Modellierung gehandhabt, während der zweite Wortteil "mal" phonem-basiert trainiert wird.

Ein praktisches Anwendungsgebiet des vorgeschlagenen Verfahrens ist ein Spracherkennungssystem, welches bei der Retourenabwicklung in einem Versandhaus eingesetzt wird, wo trotz extrem hohen Geräuschpegels in einer Halle insbesondere eine sehr hohe Genauigkeit bei der Ziffernerkennung gefordert und zusätzlich Flexibilität hinsichtlich der Erkennung von durch den jeweiligen Kunden hinzugefügten Worten wesentlich ist. Für diese Anwendung sieht das Spracherkennungsverfahren eine Ergänzung einer phonem-basierten Modellierung des gesamten Wortschatzes um eine Ganzwort-Modellierung der Ziffern vor. Es werden also alle Ziffern sowohl als phonem-basierte als auch als Ganzwort-Modelle in den Suchraum eingetragen.

Eine weitere interessante Anwendung ist die Ausführung von Werkzeugen für die Erzeugung von Wissensquellen für Spracherkenner, d. h. als Option für das sogenannte "Wortschatz-Design".

Die Ausführung der Erfindung ist nicht auf diese - rein illustrativ zu verstehenden - Ausführungs- und Anwendungsbeispiele beschränkt, sondern ebenso, unter den Schutzumfang der vorliegenden Ansprüche, in einer Vielzahl von Abwandlungen möglich.

## Patentansprüche

1. Verfahren zur Spracherkennung auf der Basis eines Hidden-Markov-Modells, bei dem zu erkennende Worte als Ketten von Zuständen modelliert und mit vorgegebenem Sprachdatenmaterial trainiert werden,
**dadurch gekennzeichnet, daß**
in einer ersten Phase der bekannte Wortschatz in einen ersten Teilwortschatz wichtiger und/oder verwechselbarer Worte und einen zweiten Teilwortschatz der sonstigen Worte unterteilt wird,
in einer zweiten Phase der erste Teilwortschatz mit einem Ganzwort-Modell und der zweite Teilwortschatz mit einem phonem-basierten Modell transkribiert und zur Gewinnung eines entsprechenden gemischten Hidden-Markov-Modell trainiert wird und
in einer dritten Phase die aus beiden Modellen gewonnenen Transkriptionen in einem einzigen Aussprache-Lexikon und das gemischte Hidden-Markov-Modell in einem einzigen Suchraum gespeichert werden.

2. Verfahren nach Anspruch 1,
**dadurch gekennzeichnet, daß**
mindestens ausgewählte Worte des ersten Teilwortschatzes als solche oder als Teile von Wort-Neubildungen neben dem Ganzwort-Modell mit dem phonem-basierten Modell trainiert und die hierbei gewonnenen phonem-basierten Transkriptionen als Aussprachevarianten in dem Aussprache-Lexikon gespeichert werden.

3. Verfahren nach Anspruch 1 oder 2,
**dadurch gekennzeichnet, daß**
der erste Teilwortschatz Ziffern und/oder Steuerbefehlsworte umfaßt.

4. Verfahren nach einem der vorangehenden Ansprüche,
**dadurch gekennzeichnet, daß**
unbekannte Worte dem zweiten Teilwortschatz zugeordnet und mit dem phonem-basierten Modell trainiert werden.

5. Spracherkenner zur Ausführung einer Spracherkennung auf der Basis eines Hidden-Markov-Modells, bei dem zu erkennende Worte als Ketten von Zuständen modelliert und mit vorgegebenem Sprachdatenmaterial trainiert werden, mit einem Modellspeicher zur Speicherung des HMM, einem Wortschatzspeicher, einer eingangsseitig mit diesem verbundenen Trainings-Verarbeitungseinheit, in der das Hidden-Markov-Modell implementiert ist, und einem ausgangsseitig mit der Trainings-Verarbeitungseinheit verbundenen Lexikonspeicher zur Speicherung eines Aussprache-Lexikons,
**dadurch gekennzeichnet, daß**
der Wortschatzspeicher einen ersten und zweiten, getrennt zugreifbaren Speicherbereich zur Speicherung eines ersten und zweiten Teilwortschatzes aufweist,
der Modellspeicher ein gemischtes Hidden-Markov-Modell aus einem Ganzwort-Modell und einem phonem-basierten Modell gespeichert enthält und
die Trainings-Verarbeitungseinheit eine erste und zweite Sub-Verarbeitungseinheit aufweist, wobei die erste Sub-Verarbeitungseinheit mit dem ersten Speicherbereich des Wortschatzspeichers verbunden und durch die Implementierung des Ganzwort-Modells zum Training des darin abgespeicherten ersten Teilwortschatzes und die zweite Sub-Verarbeitungseinheit mit dem zweiten Speicherbereich des Wortschatzspeichers verbunden und durch die Implementierung des phonem-basierten Modells zum Training des zweiten Teilwortschatzes ausgebildet ist.

6. Spracherkenner nach Anspruch 5,
**dadurch gekennzeichnet, daß**
die zweite Sub-Verarbeitungseinheit auch mit dem ersten Speicherbereich des Wortschatzspeichers verbunden und zur Gewinnung zusätzlicher Transkriptionen für den ersten Teilwortschatz ausgebildet ist und
der Lexikonspeicher zur Speicherung von jeweils mehreren Transkriptionen als Aussprachevarianten bei den verzeichneten Worten ausgebildet ist.

## Claims

1. Method of speech recognition based on a hidden Markov model in which words to be recognized are modelled as chains of states and trained using predefined speech data material, **characterized in that** in a first phase the known vocabulary is divided into a first partial vocabulary of important and/or interchangeable words and a second partial vocabulary of the other words, in a second phase the first partial vocabulary is transcribed using a whole word model and the second partial vocabulary is transcribed using a phoneme-based model and trained in order to acquire a corresponding mixed hidden Markov model, and in a third phase the transcriptions which are acquired from the two models are stored in a single pronunciation lexicon, and the next hidden Markov model is stored in a single search space.

2. Method according to Claim 1, **characterized in that** at least selected words of the first partial vocabulary are trained as such or as parts of new word formations in addition to the whole word model with the phoneme-based model, and the phoneme-based transcriptions which are acquired in the process are stored as pronunciation variants in the pronunciation lexicon.

3. Method according to Claim 1 or 2, **characterized in that** the first partial vocabulary comprises numerals and/or control instruction words.

4. Method according to one of the preceding claims, **characterized in that** unknown words are assigned to the second partial vocabulary and trained using the phoneme-based model.

5. Speech recognizer for carrying out speech recognition based on a hidden Markov model in which words to be recognized are modeled as chains of states and trained using predefined speech data material, having a model memory for storing the HMM, a vocabulary memory, a training processing unit which is connected at the input end to the latter and in which the hidden Markov model is implemented, and a lexicon memory, connected at the output end to the training processing unit, for storing a pronunciation lexicon, **characterized in that** the vocabulary memory has a first and a second memory area which can be accessed separately for storing a first and a second partial vocabulary, the model memory contains stored in it a mixed hidden Markov model composed of a whole word model and a phoneme-based model and the training processing unit has a first and a second sub-processing unit, the first sub-processing unit being connected to the first memory area of the vocabulary memory and being designed to train the first partial vocabulary stored in it by implementing the whole word model, and the second sub-processing unit being connected to the second memory area of the vocabulary memory and being designed to train the second partial vocabulary by implementing the phoneme-based model.

6. Speech recognizer according to Claim 5, **characterized in that** the second sub-processing unit is also connected to the first memory area of the vocabulary memory and is designed to acquire additional transcriptions for the first partial memory vocabulary, and the lexicon memory is designed to store a plurality of transcriptions in each case as pronunciation variants of the recorded words.

## Revendications

1. Procédé de reconnaissance vocale basé sur un modèle de Markov caché, dans lequel les mots à reconnaître sont modélisés comme des chaînes d'états et sont entraînés avec un fichier de données vocales prédéfini, **caractérisé en ce que** dans une première phase, le vocabulaire connu est subdivisé en un premier vocabulaire partiel de mots importants et/ou faciles à confondre et en un deuxième vocabulaire partiel des autres mots,
dans une deuxième phase, le premier vocabulaire partiel est transcrit avec un modèle de mot complet et le deuxième vocabulaire partiel avec un modèle basé sur un phonème et est entraîné pour obtenir un modèle de Markov caché mixte correspondant et
dans une troisième phase les transcriptions obtenues à partir des deux modèles sont enregistrées dans un lexique de prononciations unique et le modèle de Markov caché mixte est enregistré dans un espace de recherche unique.

2. Procédé selon la revendication 1, **caractérisé en ce que** au moins des mots sélectionnés du premier vocabulaire partiel sont entraînés comme tels ou comme des parties de nouvelles formations de mot en complément du modèle de mot complet avec le modèle basé sur un phonème et les transcriptions basées sur un phonème obtenues à cette occasion sont enregistrées en tant que variantes de prononciation dans le lexique de prononciation.

3. Procédé selon la revendication 1 ou 2, **caractérisé en ce que** le premier vocabulaire partiel comprend des chiffres et/ou des mots d'instruction de commande.

4. Procédé selon l'une des revendications précédentes, **caractérisé en ce que** des mots inconnus sont associés au deuxième vocabulaire partiel et sont entraînés avec le modèle basé sur un phonème.

5. Dispositif de reconnaissance vocale pour réaliser une reconnaissance vocale sur la base d'un modèle de Markov caché, dans lequel des mots à reconnaître sont modélisés comme des chaînes d'états et sont entraînés avec un fichier de données vocales prédéfini, avec un dispositif d'enregistrement de modèle pour enregistrer le MMC, un dispositif d'enregistrement de vocabulaire, une unité de traitement de l'entraînement reliée du côté de l'entrée à celui-ci, dans laquelle le modèle de Markov caché est mis en oeuvre, et un dispositif enregistreur de lexique relié du côté de la sortie à l'unité de traitement d'entraînement pour enregistrer un lexique de prononciation, **caractérisé en ce que** le dispositif enregistreur de vocabulaire présente une première et une deuxième zone d'enregistrement accessible de façon séparée pour enregistrer un premier et un deuxième vocabulaire partiel,
le dispositif enregistreur de modèle contient un modèle de Markov caché mixte composé d'un modèle de mot complet et d'un modèle basé sur un phonème et
l'unité de traitement de l'entraînement présente une première et une deuxième sous-unité de traitement, la première sous-unité de traitement est reliée à la première zone d'enregistrement du dispositif enregistreur de vocabulaire et est réalisée par la mise en oeuvre du modèle de mot complet destiné à l'entraînement du premier vocabulaire partiel y étant enregistré, et la deuxième sous-unité de traitement est reliée à la deuxième zone d'enregistrement du dispositif enregistreur de vocabulaire et est réalisée par la mise en oeuvre du modèle basé sur un phonème destiné à l'entraînement du deuxième vocabulaire partiel.

6. Dispositif de reconnaissance vocale selon la revendication 5, **caractérisé en ce que** la deuxième sous-unité de traitement est aussi reliée à la première zone d'enregistrement du dispositif enregistreur de vocabulaire et est conçue pour obtenir des transcriptions supplémentaires pour le premier vocabulaire partiel et le dispositif enregistreur de lexique est conçu pour enregistrer à chaque fois plusieurs transcriptions en tant que variantes de prononciation dans les mots enregistrés.
